# EUROPÄISCHE PATENTSCHRIFT

(11) **EP 3 941 764 B1**
(45) Veröffentlichungstag und Bekanntmachung des Hinweises auf die Patenterteilung: **11.09.2024**
(21) Anmeldenummer: 20701603.1
(22) Anmeldetag: 22.01.2020
(51) Int. Cl.: B60G 3/20, B60G 7/00

(54) **ZWEISPURIGES FAHRZEUG MIT RADAUFHÄNGUNG**
TWO-TRACK VEHICLE WITH WHEEL SUSPENSION
VÉHICULE À DEUX VOIES AVEC SUSPENSION DE ROUE

(30) Priorität: 20.03.2019 DE 102019203836
(43) Veröffentlichungstag der Anmeldung: 26.01.2022
(73) Patentinhaber: Audi AG, 85045 Ingolstadt (DE)
(72) Erfinder: MOHRLOCK, Dominik, 85114 Buxheim (DE)
(86) Internationale Anmeldenummer: PCT/EP2020/051498
(87) Internationale Veröffentlichungsnummer: WO 2020/187464

(56) Entgegenhaltungen:
- EP-A1- 2 340 177
- EP-A1- 2 758 259
- CN-A- 105 882 741
- DE-A1- 10 321 877
- DE-A1- 10 321 879
- DE-A1- 102010 017 991
- DE-A1- 102010 023 985
- DE-A1- 102011 055 704
- DE-A1- 102012 220 490
- DE-A1- 102017 205 358
- DE-B4- 10 247 937
- DE-U1- 202017 001 665
- US-A- 5 685 556

## Beschreibung

Die Erfindung betrifft ein zweispuriges Fahrzeug mit einer Radaufhängung für eine Fahrzeugachse nach dem Oberbegriff des Anspruchs 1 bzw. nach dem Oberbegriff des Anspruchs 7.

Eine solche Radaufhängung weist einen, ein Fahrzeugrad tragenden Radträger auf, der über einen Mehrlenkerverband an einem Hilfsrahmen bzw. Achsträger des Fahrzeugs angelenkt ist. Der Hilfsrahmen ist wiederum über Hilfsrahmenlager an der Fahrzeugkarosserie (zum Beispiel den Karosserie-Längsträgern) angebunden.

Bei einer Kantenüberfahrt oder bei einem Beschleunigungs- bzw. Bremsvorgang des Fahrzeugs wirkt eine Längskraft auf das Fahrzeugrad. Im Hinblick auf einen Längsfederkomfort sind im Stand der Technik die Hilfsrahmenlager, über die der Hilfsrahmen mit der Karosserie verbunden ist, in der Fahrzeuglängsrichtung mit eine erhöhten elastischen Längsnachgiebigkeit ausgelegt, um die auf das Fahrzeugrad wirkende Längskraft aufzunehmen. Im Falle einer Trapezlenker-Fahrzeugachse kommt es hierbei im Stand der Technik zusätzlich zu einer Verdrehung des Trapezlenkers und/oder zu einer Längs-Verlagerung des Trapezlenkers um einen Längsweg in der Fahrzeuglängsrichtung. Der Trapezlenker-Längsweg ist im obigen Fall insbesondere durch Anschläge an den fahrzeuginnen liegenden Trapezlenkerlagern begrenzt.

Für den Fall, dass die obige, im Hinblick auf Längsfederkomfort ausgelegte Fahrzeugachse elektrisch betrieben wird, ergibt sich der folgende Sachverhalt: So kann eine Elektromaschine entweder auf dem Hilfsrahmen oder radnah auf dem Trapezlenker der Radaufhängung montiert sein und über eine Antriebswelle mit dem Fahrzeugrad trieblich verbunden sein. In diesem Fall kommt es bei einer Längskraft-Einwirkung auf das Fahrzeugrad in Folge der Längs-Verlagerung des Hilfsrahmens und/oder des Trapezlenkers zu unerwünschten Elektromaschinen-Schwingungen.

Aus der DE 10 2011 055 704 A1 ist eine gattungsgemäße Mehrlenker-Hinterradachse für ein Kraftfahrzeug mit einem Trapezlenker bekannt. Aus der DE 694 12 909 T2 ist ebenfalls eine Radaufhängung mit einem Trapezlenker bekannt.

Die DE 10 2011 055 704 A1 offenbart ein zweispuriges Fahrzeug entsprechend dem Oberbegriff des Anspruchs 1 bzw. entsprechend dem Oberbegriff des Anspruchs 7.

Die Dokumente US 5 685 556 A, DE 103 218 79 B4 und DE 10 2012 220 490 A1 beschreiben jeweils Radaufhängungen mit einer höheren Längsnachgiebigkeit an denen den Radträger zugewandten Anbindungspunkten.

Die Aufgabe der Erfindung besteht darin, eine Radaufhängung mit einem besonders hohen Längskomfort bereitzustellen. Darüber hinaus soll die Radaufhängung bei einer elektrisch betriebene Fahrzeugachse unerwünschte Schwingungen aufgrund der Elektromaschinenmasse vermeiden.

Die Aufgabe ist durch die Merkmale des Anspruches 1 gelöst. Bevorzugte Weiterbildungen der Erfindung sind in den Unteransprüchen offenbart.

Die Erfindung geht von einem zweispurigen Fahrzeug mit einer Radaufhängung aus, deren Radträger über einen Mehrlenkerverband am Fahrzeugaufbau angelenkt ist. Der Mehrlenkerverband weist einen als Vierpunktlenker ausgebildeten Trapezlenker auf, der zwei aufbauseitige Anbindungspunkte und zwei radträgerseitige Anbindungspunkte aufweist. Gemäß dem kennzeichnenden Teil sind die radträgerseitigen Anbindungspunkte mit größeren elastischen Längsnachgiebigkeit, das heißt weicher, ausgelegt als die aufbauseitigen Anbindungspunkte. Bei einer Längskraft-Einwirkung auf das Fahrzeugrad wird daher der Radträger mit Bezug auf den (sich weitgehend nicht längsverlagernden) Trapezlenker um einen Längsweg in der Fahrzeuglängsrichtung verlagert. Aufgrund der jetzt größeren Längsnachgiebigkeit auf Seiten des Radträgers können die Hilfsrahmenlager steifer ausgeführt werden. Insbesondere bei Kombination der Fahrzeugachse mit einer Elektromaschine ergibt sich der folgende Vorteil: So kann die Elektromaschine auf dem Hilfsrahmen oder bei einer radnahen Lagerung auf dem Trapezlenker angeordnet sein. Erfindungsgemäß ergibt sich daher bei Längskraft-Einwirkung auf das Fahrzeugrad keine oder nur eine minimale Längsbewegung des Hilfsrahmens oder des Trapezlenkers aufgrund der nun steiferen Hilfsrahmenlager und/oder aufbauseitigen Trapezlenkerlagern. Entsprechend ist auch die auf dem Hilfsrahmen oder dem Trapezlenker montierte Elektromaschine keinen Längsbewegungen ausgesetzt, wodurch im Fahrbetrieb unerwünschte Schwingungen ausbleiben oder deutlich reduziert werden.

In einer technischen Umsetzung ist der Mehrlenkerverband über aufbauseitige Anbindungspunkte an einem Hilfsrahmen angelenkt. Der Hilfsrahmen ist wiederum über Hilfsrahmenlager an der Fahrzeugkarosserie (zum Beispiel Karosserie-Längsträgern) angebunden. Der Hilfsrahmen oder der Trapezlenker kann eine Elektromaschine tragen, die über eine Antriebswelle trieblich mit dem Fahrzeugrad verbunden ist. Die Hilfsrahmen-lager sowie die aufbauseitigen Anbindungspunkte des Mehrlenkerverbands sind in der Fahrzeuglängsrichtung im Vergleich zu den radträgerseitigen Trapezlenker-Anbindungspunkte so ausgeführt, dass der Großteil der Längsnachgiebigkeit aus der radträgerseitigen Anbindung resultiert.

Der Mehrlenkerverband weist erfindungsgemäß neben dem Trapezlenker genau drei weitere Radlenker auf. Diese sind erfindungsgemäß als Zweipunktlenker mit jeweils einem aufbauseitigen Anbindungspunkt und einem radträgerseitigen Anbindungspunkt bereitgestellt. Die drei weiteren Radlenker können bevorzugt als Querlenker realisiert sein, die sich in Flucht zur Fahrzeugquerrichtung erstrecken. Sämtliche aufbau- und radträgerseitigen Anbindungspunkte des Mehrlenkerverbands können als Schwenklager mit einer in Flucht zur Fahrzeuglängsrichtung ausgerichteten Schwenkachse realisiert sein.

Die drei weiteren Radlenker können bei einer Längskraft-Einwirkung auf das Fahrzeugrad die Radträger-Bewegung vorgeben. Hauptsächlich handelt es sich hierbei um eine Längs-Verlagerung des Radträgers, und zwar überlagert von einer leichten Vorspur- oder Nachspurdrehung des Radträgers.

Erfindungsgemäß ist der Trapezlenker zusammen mit einem fahrzeugunteren Radlenker in einer unteren Lenkerebene angeordnet. In der unteren Lenkerebene ist erfindungsgemäß der untere Radlenker um einen freien Vertikalversatz unterhalb des Trapezlenkers positioniert. Der radträgerseitige Anbindungspunkt des unteren Radlenkers kann somit über einen Vertikalversatz unterhalb der radträgerseitigen Trapezlenker-Anbindungspunkte angeordnet sein.

In einer oberen Lenkerebene sind erfindungsgemäß ein fahrzeugvorderer oberer Radlenker und ein fahrzeughinterer oberer Radlenker angeordnet. Der radträgerseitige Anbindungspunkt des vorderen oberen Radlenkers und die fahrzeugvorderen Trapezlenker-Anbindungspunkte sind erfindungsgemäß in der Fahrtrichtung vor einer Fahrzeugrad-Drehachse angeordnet. Demgegenüber sind die radträgerseitigen Anbindungspunkte des unteren Radlenkers sowie des fahrzeughinteren oberen Radlenkers und auch die fahrzeughinteren Trapezlenker-Anbindungspunkte erfindungsgemäß hinter der Fahrzeugrad-Drehachse angeordnet.

In einer Weiterbildung der Erfindung kann der radträgerseitige Anbindungspunkt des vorderen, oberen Radlenkers um einen Längsversatz vor dem radträgerseitigen, vorderen Trapezlenker-Anbindungspunkt angeordnet sein. Alternativ und/oder zusätzlich kann der radträgerseitige Anbindungspunkt des vorderen, oberen Radlenkers um einen Hochversatz oberhalb des radträgerseitigen, vorderen Trapezlenker-Anbindungspunktes angeordnet sein. Der radträgerseitige Anbindungspunkt des hinteren, oberen Radlenkers kann um einen Hochversatz oberhalb des hinteren, radträgerseitigen Trapezlenker-Anbindungspunktes angeordnet sein. Alternativ und/oder zusätzlich kann der radträgerseitige Anbindungspunkt des hinteren, oberen Radlenkers um einen Längsversatz vor dem hinteren, radträgerseitigen Trapezlenker-Anbindungspunkt angeordnet sein.

In einer ersten erfindungsgemäßen Ausführungsvariante sind die radträgerseitigen Trapezlenker-Anbindungspunkte als Gummi-Metall-Hülsenlager realisiert. Zur Begrenzung des Radträger-Längswegs (bei Längskraft-Einwirkung auf das

Fahrzeugrad) sind im jeweiligen Gummi-Metall-Hülsenlager axial wirkende Längsanschläge vorgesehen. Jedes der Gummi-Metall-Hülsenlager kann eine Lagerinnenhülse, durch die ein die Schwenkachse definierender Lagerbolzen geführt ist, eine Lageraußenhülse, die am Trapezlager angebunden ist, und einen Elastomerkörper aufweisen. Der Elastomerkörper kann die Lagerinnenhülse und die Lageraußenhülse miteinander verbinden. Der Lagerbolzen kann in einander gegenüberliegenden Trapezlenker-Konsolenflügeln gelagert sein.

In einer zweiten erfindungsgemäßen Ausführungsvariante werden die radträgerseitigen Trapezlenker-Anbindungspunkte nicht als Gummi-Metall-Hülsenlager realisiert, sondern vielmehr jeweils mit Koppelstangen, über die der Trapezlenker am Radträger aufgehängt ist. Jede der Koppelstangen ist erfindungsgemäß an einer unteren Anlenkstelle am Trapezlenker und an einer oberen Anlenkstelle am Radträger angelenkt. Die Anlenkstellen sind erfindungsgemäß als Schwenklager mit in Flucht zur Fahrzeugquerrichtung ausgerichteten Schwenkachsen realisiert. Zur Begrenzung des Radträger-Längswegs ist erfindungsgemäß zwischen dem Trapezlenker und dem Radträger ein Feder-Dämpfer-Element zwischengeschaltet.

Nachfolgend ist ein Ausführungsbeispiel der Erfindung anhand der beigefügten Figuren beschrieben.

Es zeigen:
Figur 1 bis 4 unterschiedliche Ansichten einer Radaufhängung für eine Fahrzeugachse eines zweispurigen Fahrzeugs gemäß einem ersten Ausführungsbeispiel; und
Figuren 5 und 6 weitere Ansichten eines zweiten Ausführungsbeispiels der Radaufhängung.

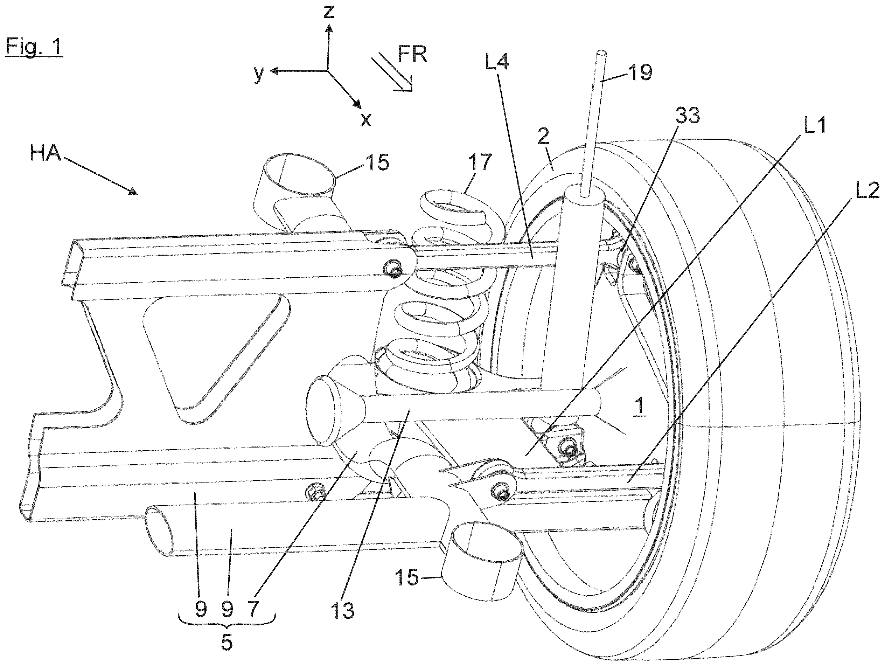

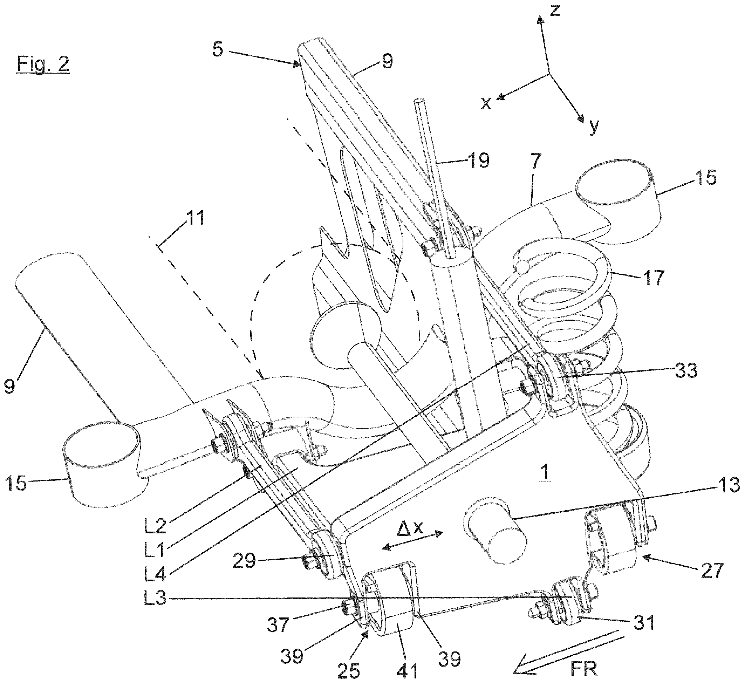

In der Figur 1 ist die linke Radaufhängung einer elektrisch betriebenen Hinterachse HA eines zweispurigen Fahrzeugs gezeigt. Die in den Figuren nicht dargestellte rechtsseitige Radaufhängung ist mit Bezug auf eine Fahrzeuglängsmittelebene spiegelbildlich ausgeführt. In der Figur 1 weist die Radaufhängung einen, ein Fahrzeugrad 2 tragenden Radträger 1 auf, der über einen Mehrlenkerverband 3 (nur in Figur 2 dargestellt) an einem karosserieseitigen Hilfsrahmen 5 angelenkt ist. Der Hilfsrahmen 5 weist in der Figur 1 zwei seitliche Hilfsrahmen-Längsträger 7 auf, von denen in der Figur 1 oder 2 nur einer gezeigt ist. Die beiden Hilfsrahmen-Längsträger 7 sind über vordere und hintere Hilfsrahmen-Querträger 9 miteinander verbunden. Der Hilfsrahmen 5 trägt in der Figur 2 eine nur grob schematisch mit gestrichelter Linie angedeutete Elektromaschine 11. Die Elektromaschine 11 ist über eine Antriebswelle 13 trieblich mit dem Fahrzeugrad 2 verbunden. Der Hilfsrahmen-Längsträger 7 ist in der Figur 1 oder 2 an angedeuteten vorderen und hinteren Hilfsrahmen-Lagern 15 am Fahrzeugaufbau angebunden.

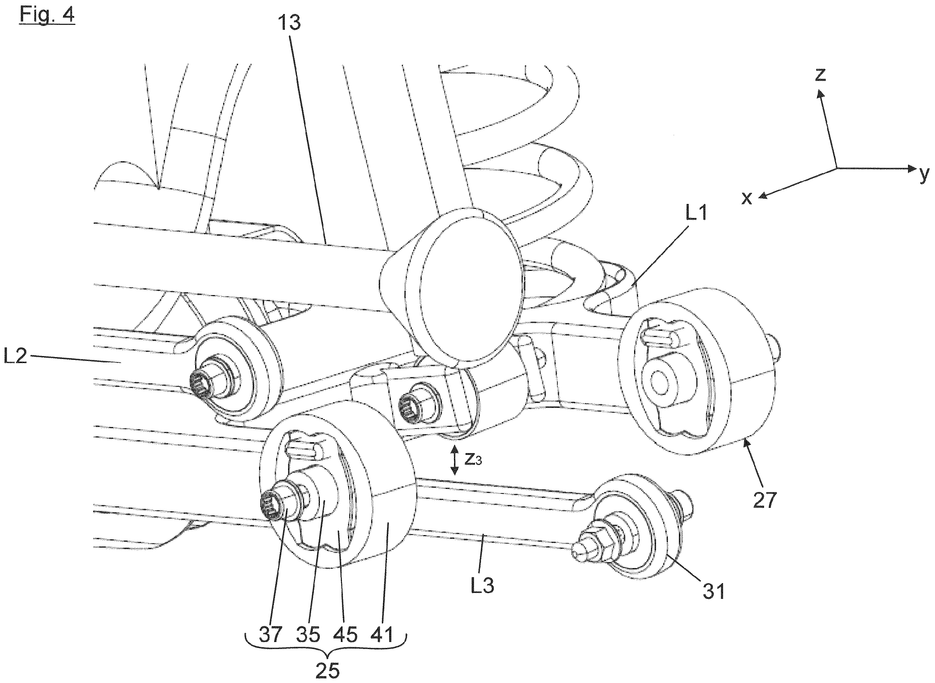

Wie aus den Figuren weiter hervorgeht, weist der Mehrlenkerverband 3 einen als Vierpunktlenker ausgebildeten Trapezlenker L1 auf. Dieser ist zusammen mit einem, um einen Hochversatz z₃ (Figur 4) unterhalb des Trapezlenkers L1 angeordneten unteren Radlenker L3 in einer unteren Lenkerebene angeordnet. In einer oberen Lenkerebene der Radaufhängung sind ein vorderer, oberer Radlenker L2 und ein hinterer, oberer Radlenker L4 angeordnet. Der Trapezlenker L1 weist einen flächigen, plattenförmigen Grundkörper auf, auf dem eine Tragfeder 17 und ein Teleskop-Stoßdämpfer 19 abgestützt sind. Der Trapezlenker L1 ist als ein Vierpunktlenker realisiert, der an zwei aufbauseitigen Anbindungspunkten 21, 23 am Hilfsrahmen 5 angelenkt ist und an zwei radträgerseitigen Anbindungspunkten 25, 27 am Radträger 1 angelenkt ist. Die weiteren Radlenker L2, L3 und L4 sind in der Figur 1 als Zweipunktlenker mit jeweils einem aufbauseitigen Anbindungspunkt und einem radträgerseitigen Anbindungspunkt 29, 31, 33 ausgebildet. Die drei Radlenker L2, L3, L4 sind Querlenker, die sich in Flucht zur Fahrzeugquerrichtung y erstrecken. Sämtliche aufbau- und radträgerseitigen Anbindungspunkte des Mehrlenkerverbands 3 sind in den Figuren als Schwenklager mit einer in Flucht zur Fahrzeuglängsrichtung x ausgerichteten Schwenkachse Sₓ realisiert.

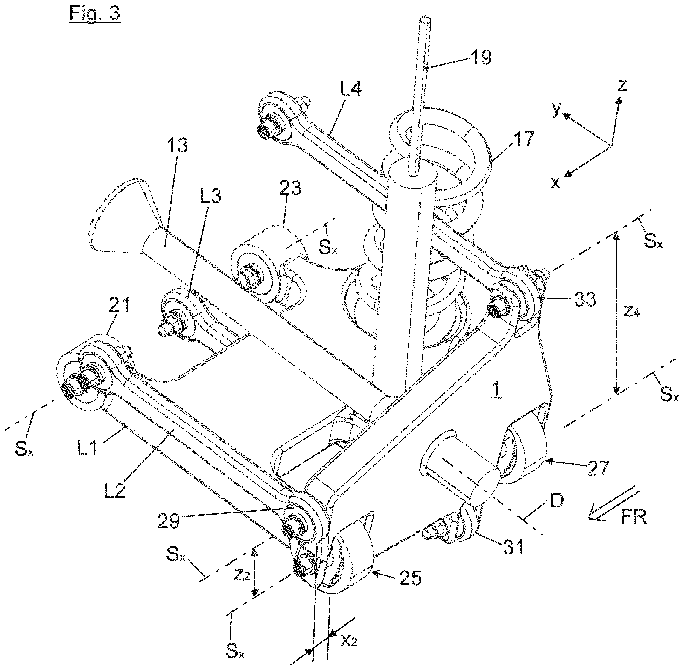

Nachfolgend wird die Lenker-Anordnung detailliert beschrieben: Demzufolge sind der radträgerseitige Anbindungspunkt 29 des vorderen oberen Radlenkers L2 und die beiden fahrzeugvorderen Trapezlenker-Anbindungspunkte 21, 25 in der Fahrtrichtung FR vor einer Fahrzeugrad-Drehachse D (Figur 3) angeordnet. Der radträgerseitige Anbindungspunkt 31 des unteren Radlenkers L3 sowie der radträgerseitige Anbindungspunkt 33 des hinteren, oberen Radlenkers L4 sind in der Figur 2 bzw. 3 hinter der Fahrzeugrad-Drehachse D angeordnet.

In der Figur 2 ist der radträgerseitige Anbindungspunkt 29 des vorderen, oberen Radlenkers L2 um einen Längsversatz x₂ (Figur 3) vor dem radträgerseitigen, vorderen Trapezlenker-Anbindungspunkt 25 angeordnet. Zudem ist der radträgerseitige Anbindungspunkt 29 des vorderen, oberen Radlenkers L2 um einen Hochversatz z₂ (Figur 2) oberhalb des radträgerseitigen, vorderen Trapezlenker-Anbindungspunkts 25 positioniert.

Der radträgerseitige Anbindungspunkt 33 des hinteren, oberen Radlenkers L4 ist um einen Hochversatz z₄ oberhalb des hinteren radträgerseitigen Trapezlenker-Anbindungspunkts 27 positioniert. Ferner ist der radträgerseitige Anbindungspunkt 33 um einen Längsversatz vor dem hinteren, radträgerseitigen Trapezlenker-Anbindungspunkt 27 positioniert.

Die vorderen aufbauseitigen und radträgerseitigen Trapezlenker-Anbindungspunkte 21, 25 sind in etwa in Flucht zur Fahrzeugquerrichtung y nebeneinander positioniert. In gleicher Weise sind auch die hinteren, aufbauseitigen sowie radträgerseitigen Trapezlenker-Anbindungspunkte 23, 27 in Querflucht zueinander positioniert.

In dem ersten Ausführungsbeispiel der Figuren 1 bis 4 sind die radträgerseitigen Trapezlenker-Anbindungspunkte 25, 27 als Gummi-Metall-Hülsenlager realisiert. Jedes der Gummi-Metall-Hülsenlager weist in der Figur 4 eine Lagerinnenhülse 35 auf, durch die ein, die Schwenkachse S definierender Lagerbolzen 37 geführt ist. Der Lagerbolzen 37 ist jeweils mit Radträgerkonsolenflügeln 39 (Figur 2) verschraubt. Das Gummi-Metall-Hülsenlager ist in ein Auge 41 an der Außenseite des Trapezlenker eingepresst.

Der Erfindungskern betrifft den Sachverhalt, dass die als Gummi-Metall-Hülsenlager realisierten radträgerseitigen Trapezlenker-Anbindungspunkte 25, 27 mit einer größeren elastischen Längsnachgiebigkeit, das heißt weicher, ausgelegt sind als die aufbauseitigen Trapezlenker-Anbindungspunkte 21, 23 sowie die Hilfsrahmen-Lager 15. Bei Einwirkung einer Längskraft auf das Fahrzeugrad 2 während des Fahrbetriebs wird daher der Radträger 1 mit Bezug auf den Trapezlenker L1 um einen Längsweg Δx (Figur 2) in der Fahrzeuglängsrichtung x verlagert. Der Trapezlenker L1 und der Hilfsrahmen 5 werden dagegen in der Fahrzeuglängsrichtung x nicht oder nur geringfügig verlagert. Zur Begrenzung des Radträger-Längswegs Δx weisen die Gummi-Metall-Hülsenlager axial wirkende Längsanschläge auf.

Die Längsverlagerung über den Längsweg Δx des Radträgers 1 wird durch die drei Radlenker L2, L3 und L4 vorgegeben. Dabei kann der Längsverlagerung des Radträgers 1 eine leichte Vorspur- oder Nachspurdrehung überlagert sein.

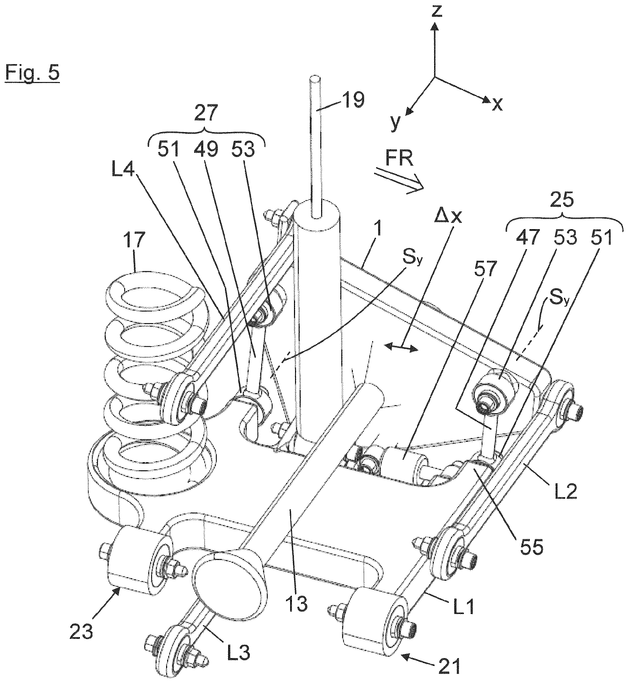

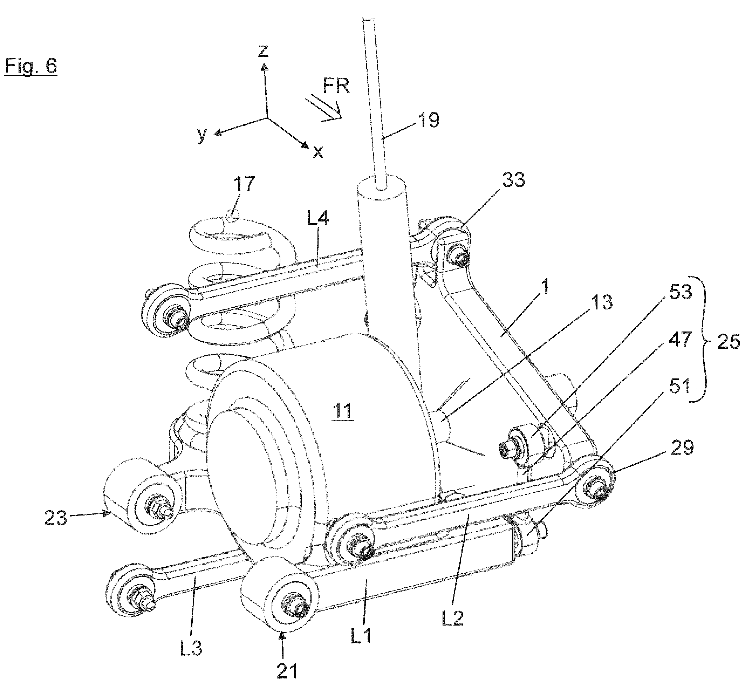

In den Figuren 5 oder 6 ist eine Radaufhängung gemäß einem zweiten Ausführungsbeispiel gezeigt. Der grundsätzliche Aufbau sowie die Funktionsweise der in den Figuren 5 oder 6 gezeigten Radaufhängung ist im Wesentlichen identisch mit dem Aufbau/der Funktionsweise des ersten Ausführungsbeispiels. Im Unterschied zur Figur 1 sind im zweiten Ausführungsbeispiel die radträgerseitigen Trapezlenker-Anbindungspunkte 25, 27 nicht als Gummi-Metall-Hülsenlager realisiert, sondern vielmehr mit jeweils einer Koppelstange 47, 49.

In der Figur 5 oder 6 sind die beiden Koppelstangen 47, 49 in etwa vertikal ausgerichtet. Jede der Koppelstangen 47, 49 ist an einer unteren Anlenkstelle 51 am Trapezlenker L1 angelenkt und an einer oberen Anlenkstelle 53 am Radträger 1 angelenkt. Die oberen und unteren Anlenkstellen 51, 53 sind als Schwenklager mit in Flucht zur Fahrzeugquerrichtung y ausgerichteten Schwenkachsen S_{y} ausgebildet. Zur Begrenzung des Radträger-Längswegs Δx ist zwischen einem vorderen Tragarm 55 des Trapezlenkers L1 und dem Radträger 1 ein Feder-Dämpfer-Element 57 angeordnet.

In der Figur 6 ist die Elektromaschine 11 nicht auf dem Hilfsrahmen 5 abgestützt, sondern in einer radnahen Lagerung unmittelbar auf dem Trapezlenker L1 abgestützt, und zwar zwischen dem vorderen oberen Lenker L2 und den hinteren oberen Lenker L4.

### BEZUGSZEICHENLISTE:

- 1: Radträger
- 2: Fahrzeugrad
- 3: Mehrlenkerverband
- 5: Hilfsrahmen
- 7: Hilfsrahmen-Längsträger
- 9: Hilfsrahmen-Querträger
- 11: Elektromaschine
- 13: Antriebswelle
- 15: Hilfsrahmen-Lager
- 17: Tragfeder
- 19: Stoßdämpfer
- 21: vorderer aufbauseitiger Trapezlenker-Anbindungspunkt
- 23: hinterer aufbauseitiger Trapezlenker-Anbindungspunkt
- 25: vorderer radträgerseitiger Trapezlenker-Anbindungspunkt
- 27: hinterer radträgerseitiger Trapezlenker-Anbindungspunkt
- 29, 31, 33: radträgerseitige Anbindungspunkte der Lenker L2, L3, L4
- 35: Lagerinnenhülse
- 37: Lagerbolzen
- 39: Konsolenflügel des Radträgers
- 41: Lageraufnahme im Trapezlenker
- 45: Elastomerkörper
- 47, 49: Koppelstange
- 51: untere Anlenkstelle
- 53: obere Anlenkstelle
- Sₓ, S_{y}: Schwenkachsen
- 55: Trapezlenker-Tragarm
- 57: Feder-Dämpfer-Element
- L1: Trapezlenker
- L2, L3, L4: Querlenker
- HA: Fahrzeugachse
- D: Fahrzeugrad-Drehachse
- FR: Fahrtrichtung
- Δx: Längsweg
- Sₓ, S_{y}: Schwenkachsen

## Patentansprüche

1. Zweispuriges Fahrzeug mit einer Radaufhängung für eine Fahrzeugachse (HA) des zweispurigen Fahrzeugs, mit einem, ein Fahrzeugrad (2) tragenden Radträger (1), der über einen Mehrlenkerverband (3) an einem Fahrzeugaufbau angelenkt ist, welcher Mehrlenkerverband (3) einen als Vierpunktlenker ausgebildeten Trapezlenker (L1) mit zwei aufbauseitigen Anbindungspunkten (21, 23) und mit zwei radträgerseitigen Anbindungspunkten (25, 27) aufweist, wobei der Mehrlenkerverband (3) neben dem Trapezlenker (L1) genau drei weitere Radlenker (L2, L3, L4) aufweist, die als Zweipunktlenker mit jeweils einem aufbauseitigen Anbindungspunkt und einem radträgerseitigen Anbindungspunkt (29, 31, 33) ausgebildet sind, und wobei der Trapezlenker (L1) zusammen mit einem fahrzeugunteren Radlenker (L3) in einer unteren Lenkerebene angeordnet ist, in der der fahrzeuguntere Radlenker (L3) um einen Hochversatz (z₃) unterhalb des Trapezlenkers (L1) positioniert ist, wobei in einer oberen Lenkerebene ein vorderer, oberer Radlenker (L2) und ein hinterer oberer Radlenker (L4) angeordnet sind, wobei der radträgerseitige Anbindungspunkt (29) des vorderen oberen Radlenkers (L2) und der vordere Trapezlenker-Anbindungspunkt (25) in der Fahrtrichtung (FR) vor einer Fahrzeugrad-Drehachse (D) angeordnet sind, und wobei die radträgerseitigen Anbindungspunkte (31, 33) des unteren Radlenkers (L3) sowie des hinteren oberen Radlenkers (L4) und der fahrzeughintere Trapezlenker-Anbindungspunkt (27) hinter der Fahrzeugrad-Drehachse (D) angeordnet sind, **dadurch gekennzeichnet, dass** die beiden radträgerseitigen Trapezlenker-Anbindungspunkte (25, 27) als Gummi-Metall-Hülsenlager realisiert sind, dass die Gummi-Metall-Hülsenlager mit einer größeren elastischen Längsnachgiebigkeit, das heißt weicher, ausgelegt sind als die aufbauseitigen Trapezlenker-Anbindungspunkte (21, 23), dass bei einer Längskraft-Einwirkung auf das Fahrzeugrad (2) der Radträger (1) mit Bezug auf den Trapezlenker (L1) um einen Längsweg (Δx) in der Fahrzeuglängsrichtung (x) verlagert wird, und dass zur Begrenzung des Radträger-Längswegs (Δx) axial wirkende Längsanschläge in den Gummi-Metall-Hülsenlagern vorgesehen sind.

2. Zweispuriges Fahrzeug nach Anspruch 1, **dadurch gekennzeichnet, dass** der Mehrlenkerverband (3) über die aufbauseitigen Anbindungspunkte (21, 23) an einem Hilfsrahmen (5) angelenkt sind, und dass der Hilfsrahmen (5) über Hilfsrahmenlager (15) an der Fahrzeugkarosserie angebunden ist, und dass der Hilfsrahmen (5) oder der Trapezlenker (L1) eine Elektromaschine (11) trägt, die über eine Antriebswelle (13) trieblich mit dem Fahrzeugrad (2) verbunden ist.

3. Zweispuriges Fahrzeug nach Anspruch 2, **dadurch gekennzeichnet, dass** die Hilfsrahmenlager (15) sowie die aufbauseitigen Anbindungspunkte (21, 23) des Mehrlenkerverbands (3) in der Fahrzeuglängsrichtung (x) mit einer reduzierten elastischen Längsnachgiebigkeit, das heißt härter, ausgelegt sind als die radträgerseitigen Trapezlenker-Anbindungspunkte (25, 27).

4. Zweispuriges Fahrzeug nach Anspruch 1, 2 oder 3, **dadurch gekennzeichnet, dass** die drei Radlenker (L2, L3, L4) als Querlenker realisiert sind, die sich in Flucht zur Fahrzeugquerrichtung (y) erstrecken, und/oder dass die aufbau- und radträgerseitigen Anbindungspunkte des Mehrlenkerverbands (3) als Schwenklager mit einer in Flucht zur Fahrzeuglängsrichtung (x) ausgerichteten Schwenkachse (Sₓ) realisiert sind.

5. Zweispuriges Fahrzeug nach Anspruch 1, **dadurch gekennzeichnet, dass** der radträgerseitige Anbindungspunkt (29) des vorderen, oberen Radlenkers (L2) um einen Längsversatz (x₂) vor und/oder um einen Hochversatz (z₂) oberhalb des radträgerseitigen, vorderen Trapezlenker-Anbindungspunkts (25) angeordnet ist, und/oder dass der radträgerseitige Anbindungspunkt (33) des hinteren, oberen Radlenkers (L4) um einen Hochversatz (z₄) oberhalb und/oder um einen Längsversatz vor dem hinteren radträgerseitigen Trapezlenker-Anbindungspunkt (27) angeordnet ist.

6. Zweispuriges Fahrzeug nach einem der vorhergehenden Ansprüche, **dadurch gekennzeichnet, dass** jedes der Gummi-Metall-Hülsenlager radträgerseitig in die Lageraufnahmen (41) im Trapezlenker (L1) eingepresst sind und eine Lagerinnenhülse (35), durch die ein die Schwenkachse (Sₓ) definierender Lagerbolzen (37) geführt ist, und einen Elastomerkörper (45) aufweist, wobei der Lagerbolzen (37) in Konsolenflügeln (39) des Radträgers (1) gelagert ist.

7. Zweispuriges Fahrzeug mit einer Radaufhängung für eine Fahrzeugachse (HA) des zweispurigen Fahrzeugs, mit einem, ein Fahrzeugrad (2) tragenden Radträger (1), der über einen Mehrlenkerverband (3) an einem Fahrzeugaufbau angelenkt ist, welcher Mehrlenkerverband (3) einen als Vierpunktlenker ausgebildeten Trapezlenker (L1) mit zwei aufbauseitigen Anbindungspunkten (21, 23) und mit zwei radträgerseitigen Anbindungspunkten (25, 27) aufweist, wobei der Mehrlenkerverband (3) neben dem Trapezlenker (L1) genau drei weitere Radlenker (L2, L3, L4) aufweist, die als Zweipunktlenker mit jeweils einem aufbauseitigen Anbindungspunkt und einem radträgerseitigen Anbindungspunkt (29, 31, 33) ausgebildet sind, wobei der Trapezlenker (L1) zusammen mit einem fahrzeugunteren Radlenker (L3) in einer unteren Lenkerebene angeordnet ist, in der der fahrzeuguntere Radlenker (L3) um einen Hochversatz (z₃) unterhalb des Trapezlenkers (L1) positioniert ist, wobei in einer oberen Lenkerebene ein vorderer, oberer Radlenker (L2) und ein hinterer oberer Radlenker (L4) angeordnet sind, und wobei der radträgerseitige Anbindungspunkt (29) des vorderen oberen Radlenkers (L2) und der vordere Trapezlenker-Anbindungspunkt (25) in der Fahrtrichtung (FR) vor einer Fahrzeugrad-Drehachse (D) angeordnet sind, und dass die radträgerseitigen Anbindungspunkte (31, 33) des unteren Radlenkers (L3) sowie des hinteren oberen Radlenkers (L4) und der fahrzeughintere Trapezlenker-Anbindungspunkt (27) hinter der Fahrzeugrad-Drehachse (D) angeordnet sind, **dadurch gekennzeichnet, dass** jeder der radträgerseitigen Trapezlenker-Anbindungspunkte (25, 27) mit einer Koppelstange (47, 49) realisiert ist, dass die Koppelstange (47, 49) an einer unteren Anlenkstelle (51) am Trapezlenker (L1) angelenkt ist und an einer oberen Anlenkstelle (53) am Radträger (1) angelenkt ist, dass die Anlenkstellen (51, 53) Schwenklager mit in Flucht zur Fahrzeugquerrichtung (y) ausgerichteten Schwenkachsen (S_{y}) sind, und dass zur Begrenzung des Radträger-Längswegs (Δx) zwischen dem Trapezlenker (L1) und dem Radträger (1) ein Feder-Dämpfer-Element (57) wirkt.

## Claims

1. Two-track vehicle having a wheel suspension for a vehicle access (HA) of the two-track vehicle, having a wheel carrier (1) carrying a vehicle wheel (2), which is articulated via a multi-link assembly (3) on a vehicle body, which multi-link assembly (3) has a trapezoidal link (L1) in the form of a four-point link having two body-side connecting points (21, 23) and two wheel-side connecting points (25, 27), wherein the multi-link assembly (3) in addition to the trapezoidal link (L1) has precisely three further wheel links (L2, L3, L4) which are designed as two-point links with respectively one body-side connecting point and one wheel carrier-side connecting point (29, 31, 33), and wherein the trapezoidal link (L1) is arranged together with an under-vehicle wheel link (L3) in a lower link plane, in which the under-vehicle wheel link (L3) is positioned offset by a certain height offset (z₃) below the trapezoidal link (L1), wherein in an upper link plane are arranged a front, upper wheel link (L2) and a rear, upper wheel link (L4), wherein the wheel carrier-side connecting point (29) of the front upper wheel link (L2) and the front trapezoidal link connecting points (25) are arranged in direction of drive (FR) in front of a vehicle wheel rotational axis (D), and wherein the wheel carrier-side connecting points (31, 33) of the lower wheel link (L3) and of the rear upper wheel link (L4) and the rear-vehicle trapezoidal link connecting point (27) are arranged behind the vehicle wheel rotational axis (D), **characterised in that** the two wheel carrier-side trapezoidal link connecting points (25, 27) are realised as rubber-metal sleeve bearings, that the rubber-metal sleeve bearings are designed with a greater elastic longitudinal yield, i.e. are softer, than the body-side trapezoidal link connecting points (21, 23), that in the case of a longitudinal force acting on the vehicle wheel (2) the wheel carrier (1) is displaced in relation to the trapezoidal link (L1) by a longitudinal path (Δx) in vehicle longitudinal direction (x), and that for limiting the longitudinal path (Δx) of the wheel carrier, axially acting longitudinal abutments are provided in the rubber-metal sleeve bearings.

2. Two-track vehicle according to claim 1, **characterised in that** the multi-link assembly (3) is articulated via the body-side connecting points (21, 23) on an auxiliary frame (5), and that the auxiliary frame (5) is connected to the vehicle body via auxiliary frame bearings (15), and that the auxiliary frame (5) or the trapezoidal link (L1) carries an electric machine (11) which is connected via a driveshaft (13) drivingly to the vehicle wheel (2).

3. Two-track vehicle according to claim 2, **characterised in that** the auxiliary frame bearings (15) and the body-side connecting points (21, 23) of the multi-link assembly (3) are designed in the vehicle longitudinal direction (x) with a reduced elastic longitudinal yield, i.e. are harder, than the wheel-carrier-side trapezoidal link connecting points (25, 27).

4. Two-track vehicle according to claim 1, 2 or 3, **characterised in that** the three wheel links (L2, L3, L4) are realised as wishbones, which extend aligned to the vehicle transverse direction (y), and/or that the body-side and wheel carrier-side connecting points of the multi-link assembly (3) are realised as pivot bearings with a pivot axis (Sₓ) aligned in alignment with the vehicle longitudinal direction (x).

5. Two-track vehicle according to claim 1, **characterised in that** the wheel carrier-side connecting point (29) of the front, upper wheel link (L2) is arranged offset by a longitudinal offset (x₂) in front of and/or by a height offset (Z₂) above the wheel carrier-side, front trapezoidal link connecting point (25), and/or that the wheel carrier-side connecting point (33) of the rear, upper wheel link (L4) is arranged offset by a height offset (z₄) above and/or by a longitudinal offset in front of the rear wheel carrier-side trapezoidal link connecting point (27).

6. Two-track vehicle according to any of the preceding claims, **characterised in that** each of the rubber-metal sleeve bearings is pressed on the wheel carrier-side into the bearing receptacles (41) in the trapezoidal link (L1) and has a bearing inner sheath (35), through which a bearing bolt (37) defining the pivot axis (Sₓ) is guided, and an elastomer body (45), wherein the bearing bolt (37) is mounted in console leaves (39) of the wheel carrier (1).

7. Two-track vehicle having a wheel suspension for a vehicle access (HA) of the two-track vehicle, having a wheel carrier (1) carrying a vehicle wheel (2), which is articulated via a multi-link assembly (3) on a vehicle body, which multi-link assembly (3) has a trapezoidal link (L1) in the form of a four-point link having two body-side connecting points (21, 23) and two wheel carrier-side connecting points (25, 27), wherein the multi-link assembly (3) in addition to the trapezoidal link (L1) has precisely three further wheel links (L2, L3, L4) which are designed as two-point links with respectively one body-side connecting point and one wheel-side connecting point (29, 31, 33), and wherein the trapezoidal link (L1) is arranged together with an under-vehicle wheel link (L3) in a lower link plane, in which the under-vehicle wheel link (L3) is positioned offset by a certain height offset (z₃) below the trapezoidal link (L1), wherein in an upper link plane are arranged a front, upper wheel link (L2) and a rear, upper wheel link (L4), wherein the wheel carrier-side connecting point (29) of the front upper wheel link (L2) and the front trapezoidal link connecting points (25) are arranged in direction of drive (FR) in front of a vehicle wheel rotational axis (D), and wherein the wheel carrier-side connecting points (31, 33) of the lower wheel link (L3) and of the rear upper wheel link (L4) and the rear-vehicle trapezoidal link connecting point (27) are arranged behind the vehicle wheel rotational axis (D), **characterised in that** each of the wheel carrier-side trapezoidal link connecting points (25, 27) is realised with a coupling rod (47, 49), that the coupling rod (47, 49) is articulated at a lower articulation point (51) on the trapezoidal link (L1) and is articulated at an upper articulation point (53) on the wheel carrier (1), that the articulation points (51, 53) are pivot bearings haing pivot axes (S_{y}) aligned in alignment with the vehicle transverse direction (y), and that a spring-damper element (57) acts to delimit the wheel carrier longitudinal path (Δx) between the trapezoidal link (L1) and the wheel carrier (1).

## Revendications

1. Véhicule à deux voies avec une suspension de roue pour un essieu de véhicule (HA) du véhicule à deux voies, avec un support de roue (1) portant une roue de véhicule (2), support qui est articulé sur une carrosserie de véhicule par l'intermédiaire d'un assemblage de plusieurs bras (3) qui présente un bras trapézoïdal (L1) conçu sous forme de bras à quatre points avec deux points d'attache (21, 23) côté carrosserie et avec deux points d'attache (25, 27) côté support de roue, dans lequel l'assemblage de plusieurs bras (3) présente, outre le bras trapézoïdal (L1), exactement trois bras de roue supplémentaires (L2, L3, L4) qui sont conçus en tant que bras à deux points avec respectivement un point d'attache côté carrosserie et un point d'attache côté support de roue (29, 31, 33), et dans lequel le bras trapézoïdal (L1) est disposé avec un bras de roue (L3) sous le véhicule dans un plan de bras inférieur, dans lequel le bras de roue (L3) sous le véhicule est positionné sous le bras trapézoïdal (L1) selon un décalage vers le haut (z₃), dans lequel un bras de roue supérieur avant (L2) et un bras de roue supérieur arrière (L4) sont disposés dans un plan de bras supérieur, dans lequel le point d'attache (29) côté support de roue du bras supérieur avant (L2) et le point d'attache (25) du bras trapézoïdal avant sont disposés en avant d'un axe de rotation de roue de véhicule (D) dans le sens de la marche (FR), et dans lequel les points d'attache côté support de roue (31, 33) du bras de roue inférieur (L3) ainsi que du bras de roue supérieur arrière (L4) et le point d'attache du bras trapézoïdal (27) situé à l'arrière du véhicule sont disposés derrière l'axe de rotation (D) de la roue de véhicule, **caractérisé en ce que** les deux points d'attache du bras trapézoïdal (25, 27) côté support de roue sont conçus en tant que paliers à douilles en caoutchouc-métal, **en ce que** les paliers à douilles en caoutchouc-métal sont conçus avec une plus grande souplesse longitudinale élastique, c'est-à-dire plus souples, que les points d'attache de bras trapézoïdaux (21, 23) côté carrosserie, **en ce que**, lors d'une action de force longitudinale sur la roue de véhicule (2), le support de roue (1) est déplacé d'une course longitudinale (Δx) dans la direction longitudinale de véhicule (x) par rapport au bras trapézoïdal (L1), et **en ce que**, pour limiter la course longitudinale de support de roue (Δx), des butées longitudinales à action axiale sont prévues dans les paliers à douilles en caoutchouc-métal.

2. Véhicule à deux voies selon la revendication 1, **caractérisé en ce que** l'assemblage de plusieurs bras (3) est articulé sur un cadre auxiliaire (5) par l'intermédiaire des points d'attache (21, 23) côté carrosserie, et **en ce que** le cadre auxiliaire (5) est connecté à la carrosserie de véhicule par l'intermédiaire de paliers de cadre auxiliaire (15), et **en ce que** le cadre auxiliaire (5) ou le bras trapézoïdal (L1) porte une machine électrique (11) qui est connectée en entraînement à la roue de véhicule (2) par l'intermédiaire d'un arbre d'entraînement (13).

3. Véhicule à deux voies selon la revendication 2, **caractérisé en ce que** les paliers de cadre auxiliaire (15) ainsi que les points d'attache (21, 23) de l'assemblage de plusieurs bras (3) côté carrosserie sont conçus dans la direction longitudinale de véhicule (x) avec une souplesse longitudinale élastique réduite, c'est-à-dire plus dure que les points d'attache de bras trapézoïdaux (25, 27) côté support de roue.

4. Véhicule à deux voies selon la revendication 1, 2 ou 3, **caractérisé en ce que** les trois bras de roue (L2, L3, L4) sont conçus en tant que bras transversaux qui s'étendent en alignement par rapport à la direction transversale de véhicule (y), et/ou **en ce que** les points d'attache de l'assemblage de plusieurs bras (3) côté carrosserie et côté support de roue sont réalisés en tant que paliers de pivotement avec un axe de pivotement (Sₓ) orienté en alignement par rapport à la direction longitudinale de véhicule (x).

5. Véhicule à deux voies selon la revendication 1, **caractérisé en ce que** le point d'attache (29) du bras supérieur avant (L2) côté support de roue est disposé de manière décalée par un décalage longitudinal (x₂) en avant et/ou par un décalage vertical (Z₂) au-dessus du point d'attache de bras trapézoïdal avant (25) côté support de roue, et/ou **en ce que** le point d'attache (33) côté support de roue du bras supérieur arrière (L4) est disposé de manière décalée par un décalage vers le haut (z₄) au-dessus et/ou par un décalage longitudinal avant le point d'attache de bras arrière (27) côté support de roue.

6. Véhicule à deux voies selon l'une des revendications précédentes, **caractérisé en ce que** chacun des paliers à douilles en caoutchouc-métal est enfoncé côté support de roue dans les logements de palier (41) dans le bras trapézoïdal (L1) et présente une douille intérieure de palier (35), à travers laquelle est guidé un boulon de palier (37) définissant l'axe de pivotement (Sₓ), et un corps en élastomère (45) dans lequel le boulon de palier (37) est logé dans des ailes de console (39) du support de roue (1).

7. Véhicule à deux voies avec une suspension de roue pour un essieu de véhicule (HA) du véhicule à deux voies, avec un support de roue (1) portant une roue de véhicule (2), support qui est articulé sur une carrosserie de véhicule par l'intermédiaire d'un assemblage de plusieurs bras (3) qui présente un bras trapézoïdal (L1) conçu sous forme de bras à quatre points avec deux points d'attache (21, 23) côté carrosserie et avec deux points d'attache (25, 27) côté support de roue, dans lequel l'assemblage de plusieurs bras (3) présente, outre le bras trapézoïdal (L1), exactement trois bras de roue supplémentaires (L2, L3, L4) qui sont conçus en tant que bras à deux points avec respectivement un point d'attache côté carrosserie et un point d'attache côté support de roue (29, 31, 33), dans lequel le bras trapézoïdal (L1) est disposé avec un bras de roue (L3) sous le véhicule dans un plan de bras inférieur, dans lequel le bras de roue (L3) sous le véhicule est positionné sous le bras trapézoïdal (L1) selon un décalage vers le haut (z₃), dans lequel un bras de roue supérieur avant (L2) et un bras de roue supérieur arrière (L4) sont disposés dans un plan de bras supérieur, et dans lequel le point d'attache (29) côté support de roue du bras de roue supérieur avant (L2) et le point d'attache (25) du bras trapézoïdal avant sont disposés en avant d'un axe de rotation de roue de véhicule (D) dans le sens de la marche (FR), et en ce que les points d'attache côté support de roue (31, 33) du bras inférieur (L3) ainsi que du bras de roue supérieur arrière (L4) et le point d'attache du bras trapézoïdal (27) situé à l'arrière du véhicule sont disposés derrière l'axe de rotation (D) de la roue de véhicule, **caractérisé en ce que**chacun des points d'attache de bras trapézoïdal (25, 27) côté support de roue est réalisé avec une barre d'accouplement (47, 49), **en ce que** la barre d'accouplement (47, 49) est articulée à un point d'articulation inférieur (51) sur le bras trapézoïdal (L1) et est articulée à un point d'articulation supérieur (53) sur le support de roue (1), **en ce que** les points d'articulation (51, 53) sont des paliers de pivotement avec des axes de pivotement (S_{y}) orientés en alignement par rapport à la direction transversale de véhicule (y), et **en ce que** pour limiter la course longitudinale de support de roue (Δx), un élément ressort-amortisseur (57) agit entre le bras trapézoïdal (L1) et le support de roue (1).
